# EUROPEAN PATENT APPLICATION

(11) **EP 4 800 256 A1**
(43) Date of publication of application: **02.09.2026**
(21) Application number: 25305250.0
(22) Date of filing: 26.02.2025
(51) Int. Cl.: F16C 3/02, F16C 3/03, F16C 3/035, B64C 13/28, F16H 25/20, F16L 37/23

(54) **LOCKING MECHANISM**

(71) Applicant: Goodrich Actuation Systems SAS, 27950 Saint-Marcel (FR)
(72) Inventor: POTIER, Karl, 27950 Saint-Marcel (FR); MEDINA, Raphael, 27950 Saint-Marcel (FR)
(74) Representative: Casalonga

(57) **Abstract**

A locking mechanism (3) for an actuator (1) is provided. The mechanism includes: a rotatable shaft (14) extending along a longitudinal axis (C-C), the shaft comprising a circumferential outer surface (18) and three or more surface features (20a-20f), wherein the three or more surface features are circumferentially spaced from each other; an outer casing (16) comprising an inner surface (56) circumferentially surrounding at least part of the shaft, wherein the outer casing is axially movable between a first axial position and a second axial position relative to the shaft; and three or more balls (32a-32f), wherein each of the three or more balls is received by a respective surface feature and axially retained within the respective surface feature. Each surface feature comprises: a first surface (22) extending from a first surface first end (24) on the circumferential outer surface to a first surface second end (26), wherein the first surface second end is radially inward of the first surface first end; and a contact surface (28) extending from a contact surface first end (30) on the circumferential outer surface to the first surface second end such that at least part of the contact surface extends at an acute angle to the first surface, wherein the contact surface first end is circumferentially spaced from the first surface. Each ball is motivated towards the first surface of the respective surface feature when the shaft rotates in a first direction. Each ball is motivated away from the first surface of the respective surface feature when the shaft rotates in a second, opposite direction. A radial distance of the inner surface from the longitudinal axis varies in the axial direction such that: when the outer casing is in the first axial position, the shaft is free to rotate in the first direction and in the second direction, and when the outer casing is in the second axial position, the shaft is free to rotate in the first direction and each of the balls are wedged between the inner surface of the outer casing and their respective contact features, resisting the rotation of the shaft in the second direction.

## Description

### TECHNICAL FIELD

The present disclosure is concerned with locking mechanisms as may be used, for example, in linear actuators for aircraft actuator systems.

### BACKGROUND

Actuators are used in a wide variety of fields and applications for moving parts or surfaces from one position to another. Actuators are commonly used, for example, in aircraft, for moving flight control surfaces or aircraft parts, doors etc. Many types of actuator are known, including mechanical, hydraulic and electrical actuators and combinations thereof e.g. electro-hydrostatic actuators, EHAs. A linear actuator typically has an actuator housing, within which an actuator ram or piston rod is located for axial movement relative to the housing. The rod is moved by application of power to one end of the rod. The other end of the rod is connected to a surface or part to be moved. In contrast to this, a rotary actuator typically has an actuator housing and a shaft which is rotated relative to the housing and which is connected to a surface or part to be moved.

In some instances, it is desirable to be able to lock actuators in position, for example to lock linear actuators at extension when the flight control surface is under tension. There is a desire for a reliable mechanism for locking such actuators when power is not supplied to the locking mechanism (i.e. a power-off brake) and which is capable of withstanding high loads.

### SUMMARY

According to an aspect of the disclosure, there is provided a locking mechanism for an actuator, the mechanism comprising:
a rotatable shaft extending along a longitudinal axis, the shaft comprising a circumferential outer surface and three or more surface features, wherein the three or more surface features are circumferentially spaced from each other;
an outer casing comprising an inner surface circumferentially surrounding at least part of the shaft, wherein the outer casing is axially movable between a first axial position and a second axial position relative to the shaft; and
three or more balls, wherein each of the three or more balls is received by a respective surface feature and axially retained within the respective surface feature,
wherein each surface feature comprises:
   a first surface extending from a first surface first end on the circumferential outer surface to a first surface second end, wherein the first surface second end is radially inward of the first surface first end; and
   a contact surface extending from a contact surface first end on the circumferential outer surface to the first surface second end such that at least part of the contact surface extends at an acute angle to the first surface, wherein the contact surface first end is circumferentially spaced from the first surface,
wherein each ball is motivated towards the first surface of the respective surface feature when the shaft rotates in a first direction,
wherein each ball is motivated away from the first surface of the respective surface feature when the shaft rotates in a second, opposite direction,
wherein a radial distance of the inner surface from the longitudinal axis varies in the axial direction such that:
   when the outer casing is in the first axial position, the shaft is free to rotate in the first direction and in the second direction, and
   when the outer casing is in the second axial position, the shaft is free to rotate in the first direction and each of the balls are wedged between the inner surface of the outer casing and their respective contact features, resisting the rotation of the shaft in the second direction.

In any example of the disclosure, the inner surface may be configured such that the distance from each contact surface, at the location the ball is in contact with the contact surface, to the inner surface of the outer casing is not less than the diameter of each ball when the outer casing is in the first axial position.

In any example of the disclosure, the inner surface may be configured such that the distance from each contact surface, at the location the ball is in contact with the contact surface, to the inner surface of the outer casing is not less than the diameter of each ball when the outer casing is in the second axial position and each ball is in contact with the first surface.

In any example of the disclosure, the distance from each contact surface, at the location the ball is in contact with the contact surface, to the inner surface of the outer casing may be less than the diameter of each ball when each ball is not in contact with the first surface and when the outer casing is in the second axial position such that each ball may be wedged between the inner surface of the outer casing and the respective contact feature, resisting the rotation of the shaft in the second direction of rotation.

In any example of the disclosure, the inner surface may be angled such that the radial distance of the inner surface from the longitudinal axis continuously reduces over at least part of a longitudinal extent of the outer casing.

In any example of the disclosure, the locking mechanism may further comprise a biasing element connected to the outer casing, wherein the biasing element may bias the outer casing into the second axial position.

In any example of the disclosure, the locking mechanism may further comprise a driving assembly, wherein the driving assembly is configured to apply a driving force opposed to the biasing force when energised such that the driving force causes the outer casing to move to the first axial position.

In any example of the disclosure, the locking mechanism may further comprise a driving assembly, wherein the driving assembly is configured to apply a driving force opposed to the biasing force when energised such that the driving force retains the outer casing in the first axial position.

In any example of the disclosure, the driving assembly may comprise a solenoid and a magnetic element connected to the outer casing, wherein the magnetic element is motivated to move axially such that the outer casing is moved to the first axial position when the solenoid is energised.

In any example of the disclosure, the locking mechanism may further comprise a retainer, wherein the retainer is configured to maintain the circumferential spacing between the at least three balls.

In any example of the disclosure, the locking mechanism may further comprise a retainer, wherein the retainer is configured to maintain an axial position of each of the at least three balls relative to its respective surface feature.

In any example of the disclosure, the retainer may surround the shaft and may comprise a receptacle for receiving each respective ball.

According to another example of the disclosure, a rotary driver is provided, the rotary driver comprising a rotary drive shaft and a locking mechanism as described in any of the above examples,
wherein the rotary drive shaft is one of: integrally formed with; directly coupled to; or indirectly coupled to the shaft of the locking mechanism.

According to another example of the disclosure, an actuator is provided, the actuator comprising a rotary driver as described in the above example and an actuator output driven by the rotary driver.

In any example of the disclosure, the actuator may be a linear actuator.

In any example of the disclosure, the rotary driver may comprise an electric motor, wherein the driving assembly may be energised by power supplied to the electric motor such that:
when power is being supplied to the motor to actuate the actuator, the outer casing is held in the first axial position by the driving assembly; and
when power is not being supplied to the motor, the outer casing is in the second axial position.

According to another aspect of the disclosure, an aircraft is provided, the aircraft comprising:
at least one flight control surface; and
an actuator as described in any of the above examples, wherein the actuator output is connected to the flight control surface.

### BRIEF DESCRIPTION

Certain examples of the disclosure will now be described by way of example only and with reference to the accompanying drawings in which:
Figure 1 shows an axial-sectional view of an example linear actuator comprising a locking mechanism according to an example of the disclosure;
Figure 2A shows a cross-sectional view of the locking mechanism taken along line 2A of Figure 1;
Figure 2B shows a schematic magnified cross-sectional view of part of the locking mechanism of Figure 2A;
Figure 3 shows an exploded perspective view of the locking mechanism of Figure 2A;
Figure 4A shows an axial-sectional view of a locking mechanism according to an example of the disclosure in an un-locked position;
Figure 4B shows a magnified cross-sectional view of part of the locking mechanism of Figure 4A in the un-locked position ;
Figure 5A shows an axial-sectional view of the locking mechanism of Figure 4A in a locked position;
Figure 5B shows a magnified cross-sectional view of part of the locking mechanism of Figure 4A in the locked position; and
Figure 6 shows a cross-sectional view of the locking mechanism of Figure 2A.

### DETAILED DESCRIPTION

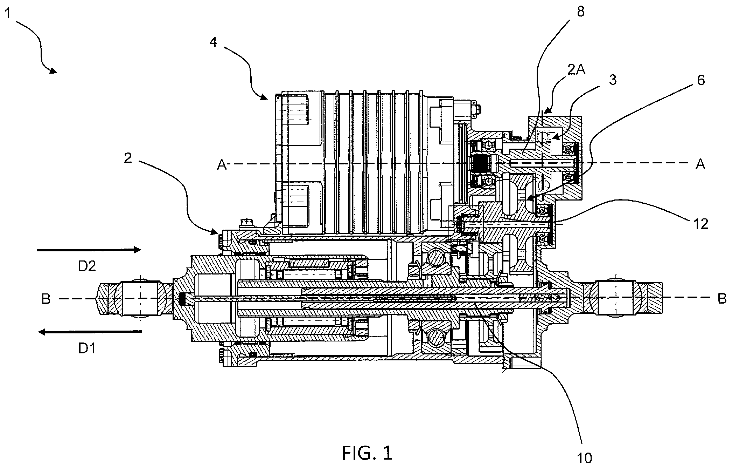

An exemplary actuator 1 is shown in Figure 1. The actuator 1 may be a linear actuator for use in an aircraft (not shown). In other examples, the actuator 1 may be a rotary actuator. In examples not shown in the figures, the actuator 1 may be mounted between a rear spar on an aircraft wing box and a control surface. The actuator 1 may be configured to move the control surface.

Flight control surfaces of an aircraft may be categorised as a primary flight control surface (such as an aileron, a rudder or a stabilizer) and a secondary flight control surface (such as a spoiler, a flap or a slat). The actuator 1 may actuate a primary or secondary flight control surface. The exemplary actuator 1 is configured to actuate a secondary flight control surface. Secondary flight control surface actuators are typically used only for short time periods relative to the overall duration of a flight. For long periods of a flight, a secondary flight control surface actuator is in a fixed, static position holding a load. The actuator 1 is under tension for long periods of a flight. Non-reversible actuators may be implemented to resist external loads on the actuator. In all examples, the exemplary actuator 1 is a non-reversible actuator comprising a locking mechanism 3.

In examples of the disclosure, the actuator 1 comprises a housing 2. Within the housing 2 the actuator 1 comprises a rotary driver, a motor 4 in some examples and as shown, and a drive train 6. The drive train 6 comprises at least a rotary drive shaft, in some examples and as shown a motor output shaft, referred to as drive shaft 8, and an actuator output, which at least in some examples in which the actuator is a linear actuator as shown, may be a piston rod 10. The drive shaft 8 extends along a longitudinal axis A-A, and is rotatable around the longitudinal axis A-A. The piston rod 10 extends along a second longitudinal axis B-B. As shown in the example of figure 1, the drive train 6 may also include an intermediate gear 12 between the drive shaft 8 and the piston rod 10. The drive train 6 connects the motor 4 to the piston rod 10 such that the motor 4 can move the piston rod 10. Rotational motion is transmitted from the motor 4 to the piston rod 10 via the drive train 6. The piston rod 10 is mounted in the housing 2. The piston rod 10 is moveable axially and /or longitudinally relative to the housing 2. The piston rod 10 may be slidably located within the housing 2. The piston rod 10 may be cylindrical in shape. In examples, the piston rod 10 is driven to move axially by the rotary motion of the rotary drive shaft.

In examples, when in an operational state (as described further below) the piston rod 10 is moveable in either direction between an extended position and a retracted position. In examples, the piston rod 10 extends further beyond the housing 2 in the extended position than in the retracted position. Thus, the piston rod 10 is axially moveable in a first direction D1 relative to the housing 2 to extend the piston rod 10. The piston rod 10 is axially moveable in a second direction D2 relative to the housing 2 to retract the piston rod 10. The second direction D2 may be opposite to the first direction D1.

In examples, the actuator 1 may be changed between an operational condition, in which the actuator 1 can move the control surface due to extension or retraction of the piston rod 10, and a locked condition, in which movement of the piston rod 10 is limited. It will be understood that when used in an aircraft, it may be desirable to place the actuator 1 into the locked condition, for example if the aircraft is flying under MMEL (master minimum equipment list) conditions. In such a case, when the actuator 1 is not required to be operational, there is a requirement to be able to lock the actuator 1 such that the piston rod 10 cannot retract, in other words so that the piston rod 10 is held in an extended position, thus holding the control surface in a fixed position to avoid an unintended change in the lift acting on an aircraft wing due to movement of the control surface.

In examples, to change the actuator 1 from the operational mode to the locked condition, the locking mechanism 3 is actuated. The locking mechanism 3 in the example of Figure 1 is disposed on the drive shaft 8 of the motor 4. It will be understood however that in other examples. The locking mechanism 3 could be disposed on other components of the drive train 6, including but not limited to the intermediate gear 12 thereof. In any example, the locking mechanism may be configured such that a rotatable shaft thereof is disposed on, integral with or rotatable with a rotary component of the drive train. In any example, the locking mechanism may be configured to resist rotation of a drive train component on which it is disposed. The locking mechanism 3 may be actuatable, for example by a solenoid as described further below, from a first condition in which the locking mechanism is energised to a second condition in which the locking mechanism is de-energised.

The locking mechanism 3 is configured such that when the locking mechanism 3 is energised the actuator 1 is in the operational mode. In examples, when the locking mechanism 3 is energised, the locking mechanism 3 does not resist the rotational motion of the drive shaft 8 in either rotational direction. In the operational mode, the locking mechanism 3 acts as a bearing. In examples, when the locking mechanism 3 is de-energised, the actuator 1 is in the locked condition. When the locking mechanism 3 is de-energised, the locking mechanism 3 resists the rotational motion of the drive shaft 8 in a first rotational direction, but does not resist the rotational motion of the drive shaft in a second rotational direction. When de-energised, the locking mechanism 3 acts as a freewheel.

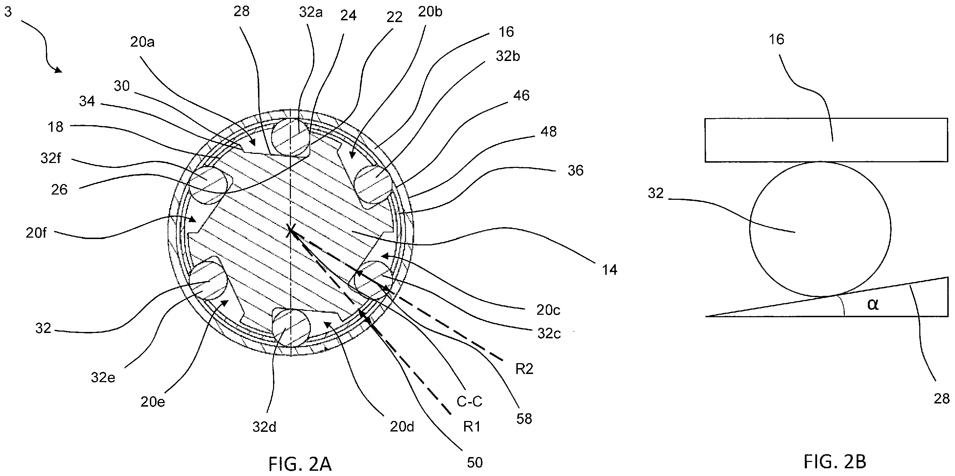

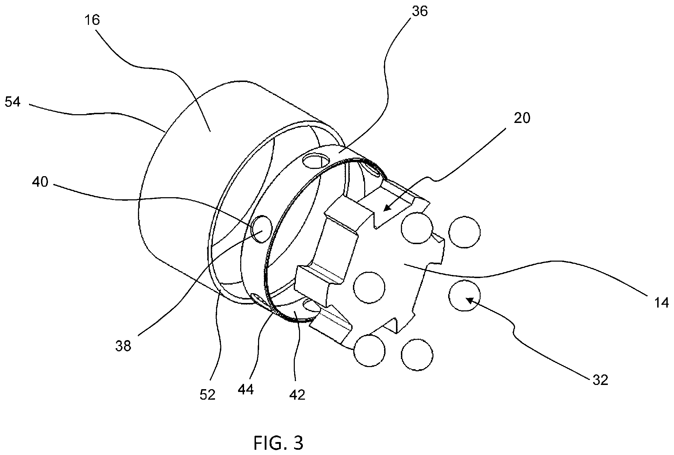

An exemplary locking mechanism 3 is shown in Figure 2. In the shown example of the Figures 2 to 6, the first rotational direction is the clockwise rotational direction, and the second rotational direction is the anti-clockwise rotational direction. It will be understood that in other examples not shown, the allocation of first and second rotational directions is not limited, and that the locking mechanism 3 described herein can be configured to resist rotation in either one of two possible rotational directions in the locking condition. In other examples not shown, the locking mechanism 3 may be configured to resist rotational motion of the drive shaft 8 in the anti-clockwise rotational direction, but not in the clockwise rotational direction using the same principles shown in the Figures and described herein.

In examples, and as seen for example in Figure 2A, the locking mechanism 3 comprises a rotatable shaft 14 that extends along a longitudinal axis C-C. In the shown examples, the rotatable shaft 14 is formed integrally with (for example as an extension of) the motor output shaft 8 such that the longitudinal axes A-A and C-C thereof are substantially aligned. The shaft 14 is surrounded by an outer casing 16 that extends along the longitudinal axis C-C. The shaft 14 rotates relative to the outer casing 16. The outer casing 16 is not a rotatable member. The locking mechanism 3 is configured such that frictional forces are utilised in order to selectively resist the rotation of the shaft 14 relative to the outer casing 16.

In the shown examples, the shaft 14 may be integrally formed with the power transmission shaft of the motor 4 i.e. the motor output shaft 8. In other examples, the shaft 14 can also be coupled to the power transmission shaft 8 of the motor 4, either directly or indirectly by being coupled to or integrally formed with a shaft of another element of the drive train 6, for example the intermediate gear. In some examples, it may be advantageous to dispose the locking mechanism 3 on a shaft integrally formed with or coupled to the motor output shaft 8 because the torque is relatively lower at this location when compared to the torque directly driving the axial motion of the piston rod 10 of the actuator 1. A smaller, more compact locking mechanism 3 can therefore be considered which reduces the weight of the locking mechanism 3. Lower expected torque also means that the locking mechanism can be manufactured to be more energy efficient and less prone to wear, thereby improving reliability and cost of maintenance. As the expected forces required to resist the shaft rotating in a first rotational direction are relatively reduced in this location, the longevity of the locking mechanism 3 may also be increased.

In examples, the shaft 14 comprises a circumferential outer surface 18. The shaft 14 comprises three or more surface features. In the example shown, the shaft 14 comprises first, second, third, fourth, fifth and sixth surface features 20a-f. The circumferential outer surface 18 extends between each of the surface features 20a-f. Each of the surface features 20a-f are circumferentially spaced around the shaft 14. Each of the surface features 20a-f is discrete from the other surface features 20a-f. Each of the surface features 20a-f are not axially spaced along the shaft 14. Each of the surface features 20a-f are axially aligned along the shaft 14. Each of the surface features 20a-f comprises a first surface 22 that extends inwards from the circumferential outer surface 18. In the shown example, the first surface 22 extends in a generally radially inward manner. The first surface 22 extends from a first surface first end 24 at the circumferential outer surface 18 to a first surface second end 26. The first surface second end 26 is radially inwards of the first surface first end 24. Each of the surface features 20a-f further comprises a contact surface 28 that extends from the circumferential outer surface 18 towards the first surface 22. The contact surface 28 extends from a contact surface first end 30 on the circumferential outer surface 18 to meet the first surface second end 26 of the first surface 22. The contact surface 28 is disposed at an angle to the first surface 22 that may be an acute angle of 90 degrees or less. The angle of the contact surface 28 relative to the first surface 22 is from 45 to 89 degrees, or from 55 to 89 degrees, or from 65 to 89 degrees, or from 75 to 89 degrees, or from 85 to 89 degrees.

In examples, the angle at which the contact surface 28 is disposed may also be characterised as a slope angle α. As shown in Figure 2B, the slope angle α is defined relative to a radially perpendicular tangent at the contact point on a ball 32 (described further below) received in a respective surface feature 20a-f between the ball 32 and the outer casing 16 which approximates the contact between the ball 32 and the outer casing 16. The slope angle α of the contact surface 28 is from 1 to 20 degrees, or from 1 to 15 degrees, or from 1 to 10 degrees, or from 1 to 5 degrees, or 5 degrees.

Each of the surface features 20a-f defines a recess in the circumferential outer surface 18 of the shaft 14. Each of the surface features 20a-f is configured to receive a ball 32. The locking mechanism 3 comprises three or more balls, and in the example shown, the locking mechanism 3 comprises first, second, third, fourth, fifth and sixth balls 32a-f. In any example, each of the balls may be spherical and may have the same radius. The distance between the circumferential outer surface 18 and the contact surface 28 defines a depth of the surface feature 20. The angled contact surface 28 means that the surface feature 20 does not comprise a uniform depth d. The depth of the surface feature 20 is variable along the length of the contact surface 28 from the first surface 22 to the first end 30 of the contact surface 28. In examples, the depth of the recess is variable. The depth of the surface feature 20 is greatest proximal the first surface 22. In the shown example, the depth of the surface feature 20 proximal the first surface 22 is such that the distance between an inner surface 56 of the outer casing 16 and the contact surface 28 is at least the radius of the respective ball 32a-f.

In any example and as shown, the contact surface 28 of each surface feature may also comprise a stopping feature 34 at the first end 30 thereof. The stopping feature 34 in the shown example is a radially protruding surface. The stopping feature 34 is a means to retain the ball in the recess of the surface feature 20. The stopping feature 34 may be an end wall.

In examples, the surface features 20a-f are configured such that each ball 32a-f may be moveable within the surface feature 20. Each ball 32a-f is movable from the first surface 22 towards the first end 30 of the contact surface 28. Each surface feature 20 is configured such that the respective ball 32 is movable such that it may contact the first end 24 of the radial wall 22 and the first end 30 of the contact surface 28. The first surface 22 and the stopping feature 34 are configured to retain the ball within the surface feature 20. The first surface 22 and the stopping feature 34 are configured to retain the respective ball within the recess of the surface feature 20.

In other examples, the number of surface features 20 may differ, for example there should be at least three surface features 20. It will be understood that the number of balls 32 may differ with the number of surface features 20. The minimum number of surface features 20 is three, so the respective minimum number of balls 32 is three. In examples, each ball 32a-f is a ball bearing. Each ball may be substantially identical to one another. The balls 32 may comprise a metal material. The balls may be made from steel. In other examples, the balls can be made from any appropriate metal alloy. In examples, the surface features 20 can be referred to as impressions in the circumferential outer surface of the shaft 14, or as cut-outs. These surface features 20a-f may be formed after the manufacture of the shaft 14 via stamping or by cutting the shaft 14. In other examples, the shaft 14 may be produced by casting the shaft to include the surface features 20a-f which removes the need for processing the shaft after manufacture. Each recess may be also be referred to as a pocket, cavity, void or socket.

In examples, the locking mechanism 3 further comprises a retainer 36. The retainer 36 surrounds the shaft 14. The retainer 36 is a ring shape that extends along the longitudinal axis C-C. The shaft 14 extends through the retainer 36. The retainer 36 is a ball retainer comprising a receptacle, for example an opening 38, for each respective ball 32 a-f. The openings 38 are circumferential spaced openings. Each of the openings 38 are defined by a rim 40 that extends through the retainer 36 from a first side 42 to a second side 44 of the retainer 36. In examples, the first side 42 of the retainer 36 is a radially inward side and faces the shaft 14. The second side 44 of the retainer 36 is a radially outward side and faces the outer casing 16. The retainer 36 is a rotatable retainer. The retainer 36 is configured to be rotated by the movement of the balls 32. The balls 32 are configured to be received in the openings 38 such that the rim 40 of each of the openings 38 maintains consistent circumferential spacing between the balls 32.

The outer casing 16 surrounds the retainer 36. The outer casing 16 is a cylindrical shape that extends along the longitudinal axis C-C. The shaft 14 extends through the outer casing 16. The retainer 36 extends within the outer casing 16. The outer casing 16 comprises a first, radially inward, surface 46 and a second, radially outward, surface 48. The first surface 46 faces the balls 32, the retainer 36, and the shaft 14. The diameter of the outer casing 16 is greater that the diameter of the circumferential outer surface of the shaft 14. In examples, a first distance 50 is defined between the circumferential outer surface 18 and the first surface 46 of the outer casing 16. This distance is measured along a radial line, represented as a dotted line R1 in Figure 2A as an example, starting at the axis C-C passing through the location that the ball 32 contacts the contact surface 20.

The outer casing 16 comprises a first axial end 52 and a second axial end 54. The surface features 20a-f of the shaft 14 are proximal the first axial end 52 of the outer casing 16. The outer casing 16 is a rotationally static casing. The outer casing 16 is a stator. The outer casing 16 is configured to be axially movable. The outer casing 16 is movable from a first axial position to a second axial position. The first surface 46 of the outer casing 16 comprises a locking surface 56 at the first axial end 52. In examples, the locking surface 56 may also be referred to as an inner surface. The locking surface 56 extends circumferentially around the first surface 46 of the outer casing 16. The locking surface 56 is configured such that the actuator 1 is in the operational mode when the outer casing 16 is in the first axial position. The locking surface 56 is configured such that the actuator 1 is in the locking condition when the outer casing 16 is in the second axial position. The locking surface 56 is configured such that the radial distance of the first surface of the outer casing 16 from the longitudinal axis C-C of the shaft 14 is greatest at the first axial end of the outer casing 16. In examples, the diameter of an annulus formed by the first surface 46 of the outer casing 16 reduces along the axial length of the locking surface 56 away from the first axial end 52 of the outer casing 16. The first distance 50 between the first surface 46 and the circumferential outer surface 18 of the shaft 14 reduces along the axial length of the locking surface 56 away from the first axial end 52 of the outer casing 16. When the outer casing 16 is in the first axial position, the first distance 50 is maximised. When the outer casing 16 is in the second axial position the first distance 50 is minimised.

A second distance 58 is defined by the sum of the depth of the surface feature 20 and the first distance 50 between the first surface 46 of the outer casing 16 and the circumferential outer surface 18. The second distance 58 is therefore the distance from the contact surface 28 of the respective surface feature 20 to the first surface 46 of the outer casing 16. This distance is measured along a radial line, represented as a dotted line R2 in Figure 2A as an example, starting at the axis C-C passing through the location that the ball 32 contacts the contact surface 20.

The shaft 14 rotates within the outer casing 16. Each of the balls 32a-f, situated within respective surface features 20a-f, are motivated towards the first surface 22 of the respective surface feature when the shaft 14 rotates in the first direction. The balls 32a-f contact the respective first surfaces 22 when the shaft 14 rotates in the first direction. The locking mechanism 3 is configured such that the diameter of the balls is not greater than the second distance 58 when the ball is in contact with the first surface 22. The ball is able to rotate such that minimal resistance is transferred from the outer casing 16 to the shaft 14 when the ball is in contact with the first surface 22. When the outer casing 16 is in either the first or second axial position, or any position therebetween, the diameter of the ball does not exceed the second distance.

In the event that the shaft 14 rotates in the second direction, each ball is motivated away from the first surface 22 of the respective surface feature. As the balls are motivated towards the first end of the contact surface 28, the depth of the surface features 20a-f reduces. The second distance 58 thereby reduces. A greater proportion of the volume of a respective ball extends radially beyond the circumferential outer surface 18.

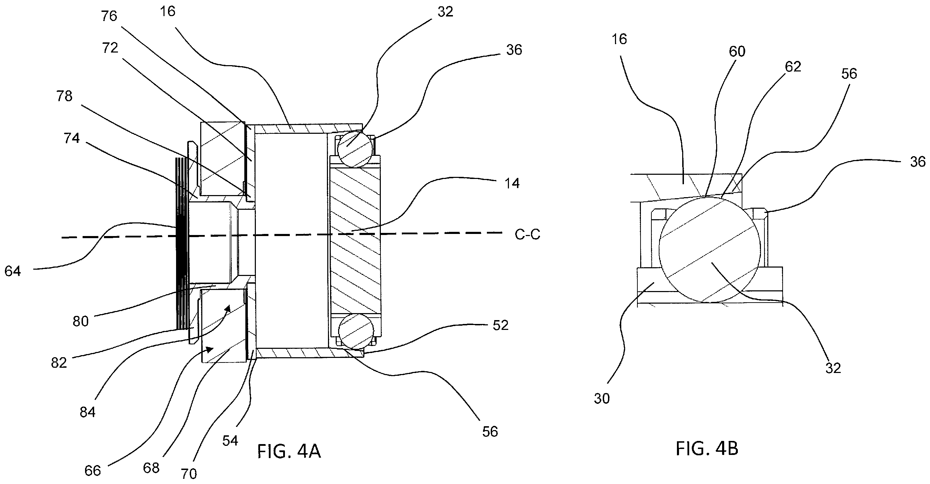

As shown in the examples in Figures 4A and 4B, the locking mechanism 3 is configured such that when the outer casing 16 is in the first axial position, the second distance remains greater than the diameter of the balls. In the first axial position of the outer casing 16, a gap 60 exists between the outer surface 62 of each respective ball 32 and the locking surface 56 when the shaft rotates in the first or second rotational direction. The ball 32 is able to rotate such that minimal resistance is transferred from the outer casing 16 to the shaft 14 when the ball 32 is at the first end 30 of the contact surface 28. When the outer casing 16 is in the first axial position, the ball is able to rotate when the ball is at the first end of the contact surface 28, in contact with the first surface 22, or at any position therebetween.

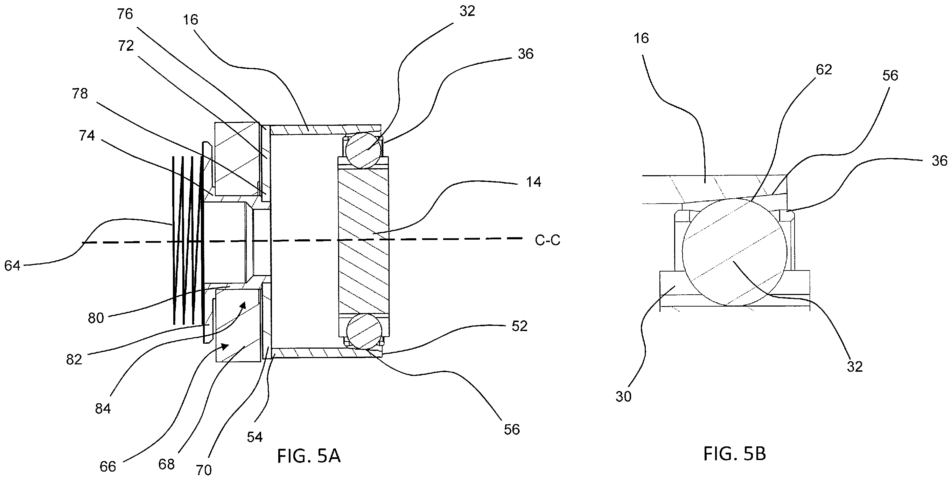

As shown in the examples in Figures 5A and 5B, the locking mechanism 3 is configured such that when the outer casing 16 is in the second axial position, the diameter of the ball 32 exceeds the second distance 58 when the ball is at the first end 30 of the surface feature. The depth of the surface feature 20 is reduced at the first end of the contact surface 28 compared to the depth at the first surface 22. Thus, each of the balls becomes wedged between the locking surface 56 of the outer casing 16 and the respective contact surface 20. The contact between the locking surface 56 and the ball creates a frictional force that resists the rotation of the shaft 14 in the second direction of rotation. In other examples, the ball does not need to be at the first end 30 of the contact surface to contact the outer casing. The locking surface and the contact surface may be configured such that when the outer casing is in the second axial position, the ball contacts the locking surface partway along the contact surface between the first surface and the first end of the contact surface. It will be understood that the configuration of the outer casing 16 may differ from that shown and described provided that the outer casing is configured such that axial movement of the outer casing allows for a position in which the outer casing is permitted to interact with the balls 32 such that frictional forces caused by the interaction impart a resistive force to the shaft 14 in a first rotational direction but not a second direction.

The locking mechanism 3 in some examples including those shown also comprises a biasing element 64 and a driving assembly 66. The biasing element 64 and the driving assembly 66 are configured to apply forces to the outer casing 16 such that the axial position of the outer casing 16 may be controlled. The biasing element 64 generates a biasing force in the longitudinal direction that biases the outer casing 16 in the second direction D2 into the second axial position. The locking mechanism 3 is therefore biased into the locked condition shown in Figures 5A and 5B. The driving assembly 66 is configured to generate a driving force opposed to the biasing force. The driving assembly 66 is configured to move the outer casing 16 to the first axial position shown in Figures 4A and 4B. The driving assembly 66 is further configured to hold the outer casing 16 in the first axial position against the biasing force when activated.

In any example including the exemplary locking mechanism 3 of Figures 4 and 5, the biasing element 64 can comprise a spring. The driving assembly 66 can comprise a solenoid 68 and a magnetic element 70. In some examples including the shown configuration, locking mechanism 3 further comprises a radial wall 72 and a flange 74. The radial wall 72 and the flange 74 are axially separated from the locking surface 56. The radial wall 72 extends radially inward from the outer casing 16 from a first end 76 to a second end 78. The radial wall 72 may be formed integrally with the outer casing 16. In the shown example the radial wall 72 is formed separately from the outer casing 16. The radial wall 72 in this example is connected to the outer casing 16. The flange 74 comprises a first and a second portion, 80, 82. The first portion 80 extends from the second end 78 of the radial wall 72 in an axial direction. The first portion 80 comprises a cylindrical shape. The first portion 80 surrounds the shaft 14. The second portion 82 extends radially from the first portion 80. The second portion 82 is located at an axial end of the first portion 80 opposed to the radial wall 72. The spring is directly connected to second portion 82. The spring biases the second portion 82, and thus the outer casing 16 via the radial wall 72, into the second axial position.

In examples, the radial wall 72 and the first and second portions 80, 82 of the flange together define a groove 84. The groove 84 is configured to receive the solenoid 68. The outer casing 16, the radial wall 72, and the flange 74 are connected together. The outer casing 16, the radial wall 72, and the flange 74 are axially movable relative to the solenoid 68. The radial wall 72 comprises a magnetic material such that when the solenoid 68 is energised, the radial wall 72 is motivated towards the solenoid 68. Thus, the solenoid 68 and the radial wall 72 form the driving assembly 66. While a solenoid 68 and a spring are shown, any variety of biasing and driving elements may be used to move the outer casing 16 from the first axial position to the second axial position.

In examples, the solenoid 68 is energised upon receiving electrical power from a power source (not shown). The power source may be a power source of the aircraft, such as an APU. By biasing the locking mechanism 3 into the locked condition, the actuator 1 may be retained at an extended position with minimum energy consumption from the power source. This is especially advantageous in some examples of secondary flight control surface actuators, especially when in use in electric aircraft, because these actuators are only operationally required for short periods during a flight. In an electric aircraft, the locking mechanism 3 offers an improved energy efficient design for the comparatively low additional weight of the component. In the event that full operation of the secondary flight control surface actuator was unexpectedly required, for example during an emergency or when performing extreme manoeuvres, electrical power can be supplied to the locking mechanism 3 in order to restore complete control over the flight surface.

In the shown example, the locking surface 56 of the outer casing 16 is an angled surface. The locking surface 56 extends only a portion of the axial length of the first surface 46 of the outer casing 16. This portion of the first surface 46 has the silhouette of a cone shape. The angle, relative to the longitudinal axis, of the locking surface 56 is from 20 to 40 degrees, or from 25 to 35 degrees, or 30 degrees.

The locking mechanism 3 can use advantageously minor forces, relative to the forces used in the actuator 1, to exert a large braking force on the shaft 14. The locking mechanism 3 is also advantageously small relative to the size of the actuator 1, utilising small axial movements to change between the operational and locking conditions. This allows the locking mechanism 3 to be light and energy efficient, which is particularly useful in aircraft, in particular electric aircraft, in which reducing the weight of components and the energy load those components exert on the power unit is of importance.

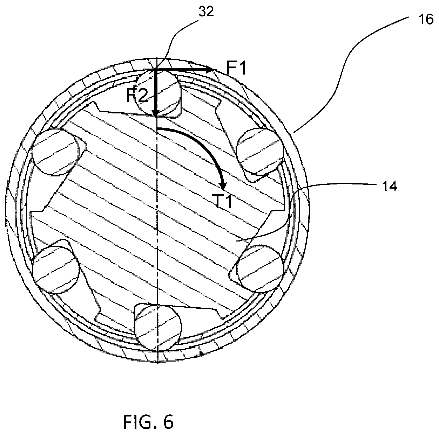

For demonstration purposes only, in an example as shown in Figure 6 in which the slope angle α (relative to a radially perpendicular tangent at the contact point on the ball between the ball and the outer casing 16 which approximates the contact between the ball and the outer casing 16) of the contact surface 28 of each surface feature is 5 degrees, the tangential load F1 between the ball and the locking surface 56 is 286N for a 10N.m torque T1 of the shaft 14. The radial contact load F2 on the ball is 953N (assuming a 0.3 friction coefficient). Advantageously, the direction that the driving assembly 66 applies the driving force is perpendicular to direction of the torque T1. The low rolling friction coefficient between the ball and the cone (~0.04) means that for a locking surface 56 with an angle of 30 degrees, the solenoid 68 can use a load of 44N to change the locking mechanism 3 from the operational mode to the locking condition. In this example, assuming the radial gap 60 between each of the balls and the outer casing 16 in the operational mode is at least 0.6mm, the axial movement of the outer casing 16 is around 1mm.

While the locking mechanism 3 described herein is considered to prevent retraction of secondary flight control surface actuators when the locking mechanism 3 is de-energised, it will be understood that the locking mechanism 3 may be used in order to prevent extension of control surface actuators.

It will be understood that at least in some examples of the disclosure, an actuator 1 according to the disclosure has the advantage of being lockable against extension or retraction of the piston rod 10 thereof in a manner which will not allow the piston rod 10 position to drift over time (as may be the case with some other types of actuator). Further, all parts of the locking mechanism 3 are included in the actuator 1 such that no additional components or spare parts need to be provided in order to lock the actuator 1 against extension or retraction of the piston rod 10.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A locking mechanism for an actuator, the mechanism comprising:
a rotatable shaft extending along a longitudinal axis, the shaft comprising a circumferential outer surface and three or more surface features, wherein the three or more surface features are circumferentially spaced from each other;
an outer casing comprising an inner surface circumferentially surrounding at least part of the shaft, wherein the outer casing is axially movable between a first axial position and a second axial position relative to the shaft; and
three or more balls, wherein each of the three or more balls is received by a respective surface feature and axially retained within the respective surface feature,
wherein each surface feature comprises:
a first surface extending from a first surface first end on the circumferential outer surface to a first surface second end, wherein the first surface second end is radially inward of the first surface first end; and
a contact surface extending from a contact surface first end on the circumferential outer surface to the first surface second end such that at least part of the contact surface extends at an acute angle to the first surface, wherein the contact surface first end is circumferentially spaced from the first surface,
wherein each ball is motivated towards the first surface of the respective surface feature when the shaft rotates in a first direction,
wherein each ball is motivated away from the first surface of the respective surface feature when the shaft rotates in a second, opposite direction,
wherein a radial distance of the inner surface from the longitudinal axis varies in the axial direction such that:
when the outer casing is in the first axial position, the shaft is free to rotate in the first direction and in the second direction, and
when the outer casing is in the second axial position, the shaft is free to rotate in the first direction and each of the balls are wedged between the inner surface of the outer casing and their respective contact features, resisting the rotation of the shaft in the second direction.

2. The locking mechanism of claim 1, wherein the inner surface is configured such that the distance from each contact surface, at the location the ball is in contact with the contact surface, to the inner surface of the outer casing is not less than the diameter of each ball when the outer casing is in the first axial position.

3. The locking mechanism of claim 1 or 2, wherein the inner surface is configured such that the distance from each contact surface, at the location the ball is in contact with the contact surface, to the inner surface of the outer casing is not less than the diameter of each ball when the outer casing is in the second axial position and each ball is in contact with the first surface.

4. The locking mechanism of claim 1, 2, or 3, wherein the distance from each contact surface, at the location the ball is in contact with the contact surface, to the inner surface of the outer casing is less than the diameter of each ball when each ball is not in contact with the first surface and when the outer casing is in the second axial position such that each ball is wedged between the inner surface of the outer casing and the respective contact feature, resisting the rotation of the shaft in the second direction of rotation.

5. The locking mechanism of any preceding claim, wherein the inner surface is angled such that the radial distance of the inner surface from the longitudinal axis continuously reduces over at least part of a longitudinal extent of the outer casing.

6. The locking mechanism of any preceding claim, wherein the locking mechanism further comprises a biasing element connected to the outer casing, wherein the biasing element biases the outer casing into the second axial position.

7. The locking mechanism of claim 6, wherein the locking mechanism further comprises a driving assembly, wherein the driving assembly is configured to apply a driving force opposed to the biasing force when energised such that the driving force causes the outer casing to move to the first axial position, and / or
such that the driving force retains the outer casing in the first axial position.

8. The locking mechanism of claim 7, wherein the driving assembly comprises a solenoid and a magnetic element connected to the outer casing, wherein the magnetic element is motivated to move axially such that the outer casing is moved to the first axial position when the solenoid is energised.

9. The locking mechanism of any preceding claim, wherein the locking mechanism further comprises a retainer, wherein the retainer is configured to:
maintain the circumferential spacing between the at least three balls; and / or
maintain an axial position of each of the at least three balls relative to its respective surface feature.

10. The locking mechanism of claim 9, wherein the retainer surrounds the shaft and comprises a receptacle for receiving each respective ball.

11. A rotary driver comprising a rotary drive shaft and a locking mechanism as claimed in any preceding claim,
wherein the rotary drive shaft is one of: integrally formed with; directly coupled to; or indirectly coupled to the shaft of the locking mechanism.

12. An actuator comprising a rotary driver as claimed in claim 11 and an actuator output driven by the rotary driver.

13. The actuator of claim 12, wherein the actuator is a linear actuator.

14. The actuator of claim 12 or 13, comprising the locking mechanism as claimed in claim 7 or 8, wherein the rotary driver comprises an electric motor, wherein the driving assembly is energised by power supplied to the electric motor such that:
when power is being supplied to the motor to actuate the actuator, the outer casing is held in the first axial position by the driving assembly; and
when power is not being supplied to the motor, the outer casing is in the second axial position.

15. An aircraft comprising:
at least one flight control surface; and
an actuator as claimed in claim 12, 13 or 14, wherein the actuator output is connected to the flight control surface.
